# EUROPÄISCHE PATENTSCHRIFT

(11) **EP 1 486 535 B1**
(45) Veröffentlichungstag und Bekanntmachung des Hinweises auf die Patenterteilung: **14.12.2011**
(21) Anmeldenummer: 04012875.3
(22) Anmeldetag: 01.06.2004
(51) Int. Cl.: C08L 77/00, C08L 67/00, C08K 5/29

(54) **Verträgliche Blends von thermoplastischen Formmassen**
Compatible blends from thermoplastic mouldings
Mélanges compatibles de masses à mouler thermoplastiques.

(30) Priorität: 12.06.2003 DE 10326380
(43) Veröffentlichungstag der Anmeldung: 15.12.2004
(73) Patentinhaber: RHEIN-CHEMIE RHEINAU GmbH, 68219 Mannheim (DE)
(72) Erfinder: Tebbe, Heiko, Dr., 41539 Dormagen (DE); Müller, Volker, 76661 Philippsburg (DE)
(74) Vertreter: Wichmann, Birgid

(56) Entgegenhaltungen:
- EP-A- 0 763 567
- EP-A- 0 985 708
- US-A- 3 835 098
- US-A- 4 128 599
- US-A- 5 621 031

## Beschreibung

Gegenstand der Erfindung sind verträgliche Blends von thermoplastischen Formmassen, Verfahren zu deren Herstellung sowie die Verwendung der erfindungsgemäßen Blends zur Herstellung von Folien, Fasern und Formkörpern.

Organische Carbodiimide und Polycarbodiimide sind bekannt. Ihre Chemie und Herstellung werden z.B. in Chemical Reviews, Vol 81 (1981), Seiten 589 bis 639 und Angewandte Chemie 74 (1962), Seiten 801 bis 806 beschrieben.

Carbodiimide und Polycarbodiimide finden vorzugsweise Verwendung als Stabilisatoren gegen die hydrolytische Spaltung von Kunststoffen auf Polyesterbasis wie z.B. in EP-A 0 602 477, US-A 2 853 473; US-A 2 853 518 und US-A 3 502 722 beschrieben Nach Angaben der DE-A 1 494 009 eignen sich hierfür insbesondere aromatische und/oder cycloaliphatische Monocarbodiimide, die in 2-und 2'-Stellung substituiert sind. Polycarbodiimide mit einem Molekulargewicht von über 500 und einem Gehalt von mehr als 3 Carbodiimidgruppen werden als Stabilisatoren gegen Einflüsse von Wärme und Feuchtigkeit in estergruppenhaltigen Kunststoffen in der DE-A 1 285 747 beschrieben.

Blends aus thermoplastischen Formmassen finden in der Technik zunehmendes Interesse, da durch das Mischen von bekannten Polymeren neue maßgeschneiderte Eigenschaftprofile erreicht werden können, siehe US-A5621031 für Blends aus Polyalkylenterephthalat und Polycarbonat. Allerdings sind nur wenige der bekannten thermoplastischen Formmassen miteinander mischbar. Die Mehrzahl der thermoplastischen Formmassen ist ohne weitere Maßnahmen unmischbar. Für die optimale Erzielung der Eigenschaften ist aber in den meisten Fällen eine mindestens partielle Mischbarkeit notwendig.

Zur Verbesserung der Mischbarkeit können verschiedene allgemein bekannte Methoden eingesetzt werden. Das Mischen von Polymeren im geschmolzenen Zustand führt nur bei verträglichen Polymeren zu einem homogenen Blend. Ein weiteres Verfahren ist das Polymerisieren von Monomeren auf ein bestehendes Polymer, die sogenannte Pfropfpolymerisation. Dieses Verfahren ist auf wenige Monomere beschränkt und kann nur mit besonderen Anlagen hergestellt werden.

Eine weitere Methode zur Verbesserung der Mischbarkeit von thermoplastischen Formmassen ist die Verwendung von sogenannten Verträglichkeitsmacher. Diese reagieren bei der Herstellung des Blends chemisch mit beiden Blendkomponenten und führen so zu einer Verbesserung der Mischbarkeit. Ein bekanntes Verfahren ist die Verwendung von Maleinsäureanhydrid oder wie in DE-A 19 739 686 beschrieben die Verwendung von Bisoxazolinen als Verträglichkeitsmacher. Die bekannten Verträglichkeitsmacher können allerdings nur auf wenige Blends aus thermoplastischen Formmassen eingesetzt werden. Gleichzeitig müssen für die Herstellung von Blends mit Maleinsäureanhydrid explosive Peroxide mitverwendet werden, die zu einer Erhöhung der Herstellkosten führen.

In der Fachzeitschrift "Gummi Fasern Kunststoffe" GAK 5/2001, Seite 299 Titel: "Reaktives Blenden von unverträglichen Kunststoffen am Beispiel von Polyamid und Polyestern" ist die Schwierigkeit der reaktiven Extrusion mittels Funktionalisierung (Abbau) des Polyamids in einem Extrusionsschritt und dem eigentlichen reaktiven Blendprozess mittels Umesterung und Kopplung des Blends in einem zweiten Extrusionsschritt ersichtlich. Hier liegt auch die technische Schwierigkeit; d.h., dass die benötigte Anordnung zweier Doppelwellenextruder nicht einfach verfügbar ist und durch den Abbau des Polyamides mit der anschließenden Umesterung des PET Schwierigkeiten in der exakten Prozesssteuerung entstehen.

Aufgabe der vorliegenden Erfindung war es, Verträglichkeitsmacher zur Verfügung zu stellen, die universell und kostengünstig zur Herstellung von Blends aus thermoplastischen Formmassen geeignet sind und damit die Bereitstellung dieser Blends zu ermöglichen.

Diese Aufgabe konnte überraschenderweise durch die Verwendung von Carbodiimiden und/oder Polycarbodiimiden als Verträglichkeitsmacher gelöst werden, wodurch die Bereitstellung von verträglichen Blends aus thermoplastischen Formmassen möglich ist. Gegenstand der vorliegenden Erfindung sind verträgliche Blends von mindestens zwei verschiedenen, an sich unverträglichen thermoplastischen Formmassen, die mindestens eine der funktionellen Gruppen -COOH, -OH, -SH, -NH₂, -NHR enthalten, und von denen eine thermoplastische Formmasse ausgewählt ist aus der Gruppe der Polyamide, die
0,01 bis 10 Gew.-% Carbodiimide und/oder Polycarbodiimide der Formel (I)

R'-(-N=C=N-R-)ₙ-R" (I),

in der
- R: einen aromatischen oder araliphatischen Arylen- bzw. Aralkylenrest bedeutet, der in mindestens einer Orthostellung, bevorzugt in beiden Orthostellungen zum aromatischen Kohlenstoffatom, das die Carbodiimidgruppe trägt, ali- phatische und/oder cycloaliphatische Substituenten mit mindestens 2 C- Atomen, bevorzugt verzweigte oder cyclische aliphatische Reste mit mindes- tens 3C-Atomen, trägt,
- R': Aryl, Aralkyl oder R-NCO, R-NHCONHR¹, R-NHCONR¹R² und R- NHCOOR³ bedeutet,
- R": -N=C=N-Aryl, -N=C=N-Aralkyl, -NCO, -NHCONHR¹, -NHCONR¹R² oder NHCOOR³ bedeutet,
wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
- n: eine ganze Zahl von 2 bis 5.000, bevorzugt von 2 bis 500, darstellt.

Gegenstand der Erfindung ist ebenfalls ein Verfahren zur Herstellung der erfindungsgemäßen Blends aus thermoplastischen Formmassen, das dadurch gekennzeichnet ist, dass die an sich unverträglichen thermoplastischen Formmassen mit Carbodiimiden und/oder Polycarbodiimiden als Verträglichkeitsmacher in der vorstehend spezifizierten Menge in einem geeigneten Mischaggregat miteinander im geschmolzenen Zustand gemischt werden.

Weiterhin ist Gegenstand der Erfindung die Verwendung der erfindungsgemäßen Blends zur Herstellung von Folien, Fasern und Formkörpern.

Die zur Herstellung der erfindungsgemäßen Blends verwendeten Carbodiimide und/oder Polycarbodiimide (Formel I) können aus Monoisocyanaten und/oder Diisocyanaten durch Kondensation unter Abspaltung von Kohlendioxid bei erhöhten Temperaturen, z.B. bei 40°C bis 200°C, in Gegenwart von Katalysatoren hergestellt werden. Geeignete Verfahren werden in DE-A-11 30 594 beschrieben. Als Katalysatoren haben sich z.B. starke Basen oder Phosphorverbindungen bewährt. Vorzugsweise werden Phospholenoxide, Phospholidine oder Phospholinoxide verwendet. Zur Herstellung der eingesetzten Carbodiimide und /oder Polycarbodiimide eignen sich alle Isocyanate, wobei bevorzugt Carbodiimide und/oder Polycarbodiimide verwendet werden, die auf durch C₁-bis C₄-Alkyl substituierten aromatischen Isocyanaten wie z.B. 2,6-Diisopropylphenylisocyant, 2,4,6-Triisopropylphenyl-1,3-diisocyanat, 2,4,6-Triethylphenyl-1,3-diisocyanat, 2,4,6-Trimethylphenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan oder deren Gemische, und auf substituierte Aralkyle, wie 1,3-Bis-(1-methyl-1-isocyanato-ethyl)-benzol basieren.

Geeignete thermoplastische Formmassen zu Herstellung der erfindungsgemäßen Blends sind alle bekannten thermoplastischen Formmassen, die mindestens eine funktionelle Gruppe aus der Gruppe Carbonsäure, Hydroxylgruppe, Aminogruppe oder Mercaptangruppe enthalten und an sich nicht miteinander verträglich sind. Die funktionelle Gruppe kann hierbei eine Endgruppe darstellen, wie z.B. in Polyamiden oder Polyestern, in die Polymerkette einpolymerisiert sein, wie z.B. Polyvinylalkohol, Polyacrylsäure oder Copolymere aus Ethylen und Acrylsäure oder auf die Polymerkette aufgepfropft sein, wie z.B. mit Maleinsäureanhydrid gepfropftes Polyethylen.

Die erfindungsgemäßen thermoplastischen Formmassen werden mittels der bekannten Polymerisationsverfahren, z.B. Polyaddition, Polykondensation oder radikalische Polymerisation, hergestellt.

Bevorzugt werden thermoplastische Formmassen auf Basis Polyamid (z.B. Polyamid 6, Polyamid 6.6, Polyamid 12, Polyamid 4,6 und Polyamid 11, Polyamid 6.9, Polyamid 6.10, Polyamid 6.12 und deren Gemische) sowie halbaromatische Polyamide (z.B. PAMXD), amorphe Polyamide (z.B. 6-3-T, PA 6 I), Polyamid-imid, PA12-Copolymere (z.B. Polyether- Blockamide), thermoplastisch- elastomere PA verwendet.. Derartige Polyamide sind bekannt und der Literatur beschrieben z.B in Saechtling, Kunststoff Taschenbuch, 27. Ausgabe, 1992, Carl Hanser Verlag, Seite 465-479.

Als zweite thermoplastische Formmasse werden bevorzugt thermoplastische Polyester auf Basis von aromatischen und / oder aliphatischen Dicarbonsäuren und einer aromatischen und / oder aliphatischen Dihydroxyverbindung verwendet.

Ein erste Gruppe bevorzugter Polyester sind Polyalkylenterephthalate mit 2 bis 10 C-Atomen im Alkoholteil.

Derartige Polyalkylenterephthalate sind bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i-bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in bekannter Weise hergestellt werden. Als bevorzugte Dicarbonsäuren sind 2,6-Naphthalindicarbonsäuren, Terephthalsäure und Isophthalsäure oder deren Mischungen zu nennen. Bis zu 30 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,2-Propandiol, 1,3-Propandiol, 1-6-Hexandiol, 1,4-Hexandiol, 1,4-Cyclohexandiol, 1,4-Cyclohexandimethylanol und Neopentylglykol oder deren Mischungen bevorzugt.

Als weitere Gruppe sind voll aromatische Polyester zu nennen, die sich von aromatischen Dicarbonsäuren und aromatischen Dihydroxyverbindungen ableiten.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Eine weitere Gruppe bilden Polyester basierend auf aliphatischen Dicarbonsäuren, wie z.B. Adipinsäure, Azelainsäure, Sebacinsäure, Dodecandisäuren und Cyclohexandicarbonsäuren, und aliphatischen Dihydroxyverbindungen, wie z.B. 1,2-Ethandiol, 1,4-Butandiol, 1,2-Propandiol, 1,3-Propandiol, 1-6-Hexandiol, 1,4-Hexandiol, 1,4-Cyclohexandiol, 1,4-Cyclohexandimethylanol und Neopentylglykol.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont) und Arnitel^{®} (DSM), Pibiflex^{®} (EniChem).

Unter Polyestern im Sinne der vorliegenden Erfindung sollen auch aromatische Polyestercarbonate verstanden werden, welche durch Umsetzung von aromatischen Dihydroxyverbindungen, vorzugsweise Bisphenol A und Bis-(4-Hydroxyphenyl)-2,2-propan, Phosgen und aromatischen Dicarbonsäuren wie Isophthalsäure und /oder Terephthalsäure erhältlich sind.

Die erfindungsgemäßen Carbodiimide und/oder Polycarbodiimide werden zusammen mit mindesten zwei verschiedenen erfindungsgemäßen thermoplastischen Formmassen zu einem Blend vermischt. Dazu werden 0,01 bis 10 Gew.-%, bevorzugt 0,1 bis 2 Gew.-%, der Carbodiimide und/oder Polycarbodiimide mit 99,99 bis 90 Gew.-% der mindestens zwei verschiedenen, erfindungsgemäßen thermoplastischen Formmassen zu einem Blend vermischt. Bevorzugt werden zwei verschiedene thermoplastische Formmassen eingesetzt. Die verschiedenen thermoplastischen Formmassen werden in Verhältnissen von 20:1 bis 1:20 eingesetzt, wobei bevorzugt ein Verhältnis von 5:1 bis 1:5 verwendet wird.

Die Mischung der erfindungsgemäßen Carbodiimide und/oder Polycarbodiimide mit den erfindungsgemäßen mindestens zwei verschiedenen thermoplastischen Formmassen kann auf den für die Kunststoffverarbeitung typischen Mischaggregaten durchgeführt werden (DIN 24450, Saechtling- Kunststofftaschenbuch). Besonders geeignet als Mischaggregate sind Kneter, Einschneckenextruder Doppelschneckenextruder, Kaskadenextruder, Entgasungs-Extruder, Mehrschneckenextruder und Planetwalzenextruder. Üblicherweise arbeitet man oberhalb der Schmelztemperatur mindestens einer der Komponenten.

Bevorzugt werden die erfindungsgemäßen Blends aus thermoplastischen Formmassen in vollständig ineinandergreifenden dichtkämmenden Doppelschneckenextrudem, Einschneckenextrudern für die Hochleistungsextrusion, welche nach dem Prinzip Stator/ Rotor (z.B. Staromix^{®} der Fa. Reifenhäuser) arbeiten, Dreischneckenextrudern, Mehrschneckenextrudern, welche nach dem Prinzip der Planetenextruder arbeiten, in kontinuierlichen/diskontinuierlichen KO-Knetern, beispielsweise mit langsamlaufender Rotor-Stator-Kombination (z.B. KEX®, Fa. Drais, Mannheim) oder in kontinuierlichen Dispersionsknetern hergestellt.

Die Mischbarkeit von thermoplastisch verarbeitbaren Polyestern mit Polyamiden und aromatischen Polycarbodiimiden wird erfindungsgemäß dadurch herbeigeführt, dass ein Polyester- Thermoplast mit einem Wassergehalt von 0,03 Gew.-%, ein Polyamid- Thermoplast mit einem Wassergehalt von 0,07 Gew.-% und ein aromatisches Polycarbodiimid und eventuell zusätzliche Additive getrennt in den Knetraum des Zweiwellenextruders gebracht, mit einem L/D- Verhältnis von 28 - 45 und speziellen Knetelementen oberhalb der Schmelztemperatur der Thermoplasten in der Schmelze homogen verteilt und extrudiert, in Strängen abgezogen und in einem Wasserbad abgekühlt, granuliert und getrocknet werden. Das so erhaltene Granulat hat einen Wassergehalt von 0,03 Gew.-%. Die Bestandteile können alternativ dazu bei Raumtemperatur miteinander vermengt und anschließend in einem Zweischneckenextruder extrudiert werden.

Die erfindungsgemäßen Blends können nach unterschiedlichen Methoden hergestellt werden. Beispielsweise können die erfindungsgemäßen Carbodiimide und/oder Polycarbodiimide direkt mit den mindestens zwei erfindungsgemäßen thermoplastischen Formmassen zu dem Blend vermischt werden. Weiterhin können die erfindungsgemäßen Carbodiimide und/oder Polycarbodiimide zuerst mit einer erfindungsgemäßen thermoplastischen Formmasse zu einem Vorbatch geblendet werden und anschließend das Vorbatch mit der nächsten erfindungsgemäßen thermoplastischen Formmasse vermischt werden. Nach einer weiteren Verfahrensweise können erst die beiden verschiedenen erfindungsgemäßen thermoplastischen Formmassen vorcompoundiert werden und anschließend ins Vorcompound die erfindungsgemäßen Carbodiimide und/oder Polycarbodiimide eingemischt werden.

Bei der Herstellung der erfindungsgemäßen Blends können noch weitere bekannte Additive wie z.B. Stabilisatoren, Füllstoffe, Farbstoffe, Flammschutzmittel und Gleitmittel in das erfindungsgemäße Blend eingearbeitet werden.

Die erfindungsgemäßen Blends können zur Herstellung von Folien, Fasern (Monofilamente und Multifilamente) und Formkörpern verwendet werden, die somit ebenfalls Gegenstand der vorliegenden Erfindung sind. Derartige Formkörper sind z.B. Maschinengehäuse, KFZ-Teile (z.B. die aus Kunststoff gefertigten Teile von Hybridartikeln wie KFZ-Kühlern/Wärmetauschern) oder andere Gegenstände des allgemeinen täglichen Gebrauchs.

Gegenstand der vorliegenden Erfindung ist auch die Verwendung von Carbodiimiden und/ oder Polycarbodiimiden als Verträglichkeitsmacher zur Herstellung von Blends aus an sich unverträglichen thermoplastischen Formmassen, wonach 0,01 bis 10 Gew.-% Carbodiimide und/oder Polycarbodiimide der Formel

R'-(-N=C=N-R-)ₙ-R" (I)

in der
- R: einen aromatischen oder araliphatischen Arylen- bzw. A- ralkylenrest bedeutet, der in mindestens einer Orthostel- lung, bevorzugt in beiden Orthostellungen zum aromati- schen Kohlenstoffatom, das die Carbodiimidgruppe trägt,
- R': aliphatische und/oder cycloaliphatische Substituenten mit mindestens 2 C-Atomen, bevorzugt verzweigte oder cycli- sche aliphatische Reste mit mindestens 3 C-Atomen, trägt, Aryl, Aralkyl oder R-NCO, R-NHCONHR¹, R- NHCONR¹R² und R-NHCOOR³ bedeutet,
- R": -N=C=N-Aryl, -N=C=N-Aralkyl, -NCO, -NHCONHR¹, - NHCONR¹R² oder -NHCOOR³ bedeutet,
wobei in R' und in R" unabhängig voneinander R¹ und R² gleich oder verschieden sind und einen Alkyl-, Cycloalkyl- oder Aral- kylrest darstellen und R³ eine der Bedeutungen von R¹ hat oder einen Polyester- oder einen Polyamidrest bedeutet und
- n: eine ganze Zahl von 2 bis 5.000, bevorzugt von 2 bis 500, darstellt, und mindestens zwei verschiedene, an sich unverträgliche thermoplastische Formmassen enthaltend mindestens eine der funktionellen Gruppen -COOH, -OH, -SH, -NH2, -NHR, wobei eine verwendete thermoplastische Formmasse ausgewählt ist aus der Gruppe der Polyamide,zu einem Blend gemischt werden

### Beispiele:

### Beispiel 1:

Auf einem Zweiwellenextruder vom Typ ZSK 25 (Werner & Pfleiderer, Stuttgart) mit einem L/D- Verhältnis von >35, ausgerüstet mit Knetelementen und einer gekühlten ersten Einzugszone wurde PET (Polyclear^{®} T86; Hoechst AG) mit einem Carboxylgruppengehalt von 20mVal/kg mit einem Polyamid (Durethan^{®} B40; Bayer AG) bei 260°C bis 280°C aufgeschmolzen. Die so extrudierten Stränge wurden in einem Wasserbad abgekühlt, granuliert und getrocknet.

Das erhaltene Granulat zeigt bereits beim schnellen Abziehen von der Extruderdüse die Neigung zur Phasentrennung. Der erstarrte Polymerstrang ist sehr spröde und bricht sehr leicht bei mechanischer Biegebeanspruchung. (Siehe Tabelle 1)

### Beispiel 2:

Auf einem Zweiwellenextruder vom Typ ZSK 25 (Werner & Pfleiderer, Stuttgart) mit einem L/D- Verhältnis von >35 ausgerüstet mit Knetelementen und einer gekühlten ersten Einzugszone wurde PET (Polyclear^{®} T86; Hoechst AG) mit einem Carboxylgruppengehalt von 20mVal/ kg mit einem Polyamid (Durethan^{®} B40; Bayer AG) und mit einem aromatischen Polycarbodiimid (Stabaxol^{®} P100; Rhein Chemie Rheinau GmbH) bei 260°C bis 280°C aufgeschmolzen. Die so extrudierten Stränge wurden in einem Wasserbad abgekühlt, granuliert und getrocknet.

Das erhaltene Granulat zeigt im Vergleich zu dem nach Beispiel 1 erhaltenen bereits eine deutliche Verbesserung der Extrusionseigenschaften.

Das Granulat wurde bei 220°C bis 280°C auf einer Spritzgussmaschine vom Typ 320 S der Firma Arburg aufgeschmolzen und zu Prüfkörpern abgespritzt.

Im Gegensatz zu dem Material aus Beispiel 1 läßt sich ein Prüfkörper aus dem Compound gemäß Beispiel 2 weit verbiegen und weist anschließend keinen Weißbruch auf. Prüfkörper aus dem Compound gemäß Beispiel 1 zeigen bei gleicher Prüfung deutlichen Spröd- bzw. Splitterbruch auf. (Siehe Tabelle 1)

### Beispiel 3:

Auf demselben Zweiwellenextruder wie in Beispiel wurde Polyethylen (Novex^{®} M21 N430) mit einem aromatischen Polycarbodiimid (Stabaxol^{®} P100; Rhein Chemie Rheinau GmbH) 3 Gew.-% bez. auf Polyethylen bei 220°C bis 280°C aufgeschmolzen. Die so extrudierten Stränge wurden in einem Wasserbad abgekühlt, granuliert und getrocknet.

### Beispiel 4:

Das Granulat aus Beispiel 3 wurde mit einem PET (Bripet^{®} 2000 BST; Helm AG) und einem Polyamid (Durethan^{®} B40; Bayer AG) als Trockenmischung (Dryblend) abgemischt und dann bei 220°C bis 280°C auf einer Spritzgussmaschine vom Typ 320 S der Firma Arburg aufgeschmolzen und zu Prüfkörpern abgespritzt.

Die Prüfkörper wurden anschließend mechanisch geprüft.

Das Granulat aus Beispiel 4 zeigt eine deutliche Verbesserung der Extrusionseigenschaften.

Im Gegensatz zu dem Material aus Beispiel 1 läßt sich ein Prüfkörper aus aus dem Compound gemäß Beispiel 4 weit verbiegen und weist anschließend keinen Weißbruch auf. Prüfkörper aus Beispiel 1 zeigt bei gleicher Prüfung deutlichen Spröd-, bzw. Splitterbruch auf. (Siehe Tabelle 1)

**Tabelle 1:**

| Beispiel | Trägerpolymer | Anteil PET [Gew.-%] | PA 6 [Gew.-%] | AnteilCarbodiimide [Gew.-%] | Polycarbodiimid-Typ | Bruch bei mechanischer Biegebeanspruchung |
|---|---|---|---|---|---|---|
| 1 | PET/ PA6 | 50,00 | 50,00 | -- | -- | ja |
| 2 | PET/ PA6/P100 | 50,00 | 48,50 | 1,50 | Stabaxol P100 | nein |
| 4 | PET/ PA6/ Beispiel3 | 42,50 | 42,50 | 0,45 | Stabaxol P100 | nein |

Die Beispiele 1, 2 und 4 werden in einem Autoklaven bei 80°C in einer gesättigten Wasserdampfatmosphäre für 2 Tage gealtert. Anschließend werden an den gealterten Zugstäben Zugversuche nach DIN 53455 durchgeführt und mit denn Ergebissen der Zugversuche vor der Alterung verglichen (siehe Tabelle 2 und 3)

**Tabelle 2:**

| Beispiel | Reißfestigkeiten nach DIN 53455 nach Alterung im Autoklav | |
|---|---|---|
| | 0 Tage | 2 Tage |
| PET | 63,52 | 3,55 |
| PA 6 | 66,96 | 47,19 |
| 1 | 62,13 | 3,37 |
| 2 | 65,05 | 18,76 |
| 4 | 53,96 | 20,45 |

**Tabelle 3:**

| Beispiel | Reißdehnung nach DIN 53455 nach Alterung im Autoklaven | |
|---|---|---|
| | 0- Tage | 2- Tage |
| PET | 6,40 | 0,88 |
| PA 6 | 5,81 | 172,13 |
| 1 | 4,7 | 1,03 |
| 2 | 5,93 | 3,05 |
| 4 | 6,38 | 3,73 |

Tabelle 2 und 3 zeigen, daß die erfindungsgemäßen Beispiele 2 und 4 im Vergleich zum Beispiel 1 nach der Alterung eine deutlich geringere Änderung der mechanischen Werte (Reißfestigkeit und Reißdehnung) aufweisen.

### Beispiel 5:

Die aus den Beispielen 1 und 2 hergestellten F3- Zugprüfkörper wurden im Vergleich zu reinem PET und PA- Prüfkörpern einem Handbiegeversuch unterzogen. Hierbei wurden die Prüfkörper an den Enden angefaßt und so gebogen, dass die beiden Prüfkörperenden sich unter der Biegekraft berühren, ohne hierbei zu zerbrechen. Diese Prüfung wurde in Anlehnung an ISO 178 für die Biegefestigkeit ermittelt.

Bei reinem PET und PA ist dies ohne größere Anstrengung möglich. Der Prüfkörper aus Beispiel 1 zerspringt schon nach geringer Biegekraft splitterartig in viele Bruchstücke (Vorsicht Verletzungsgefahr! Schutzbrille!). Der Prüfkörper aus Beispiel 2 läßt sich überraschend ebenso weit biegen wie die beiden Prüfkörper aus reinem PA oder PET.

## Patentansprüche

1. Verträgliche Blends von mindestens zwei verschiedenen, an sich unverträglichen thermoplastischen Formmassen, enthaltend mindestens eine der funktionellen Gruppen -COOH, -OH, -SH, - NH₂, -NHR, wobei eine verwendete thermoplastische Formmasse ausgewählt ist aus der Gruppe der Polyamide, **dadurch gekennzeichnet, dass** sie 0,01 bis 10 Gew.-% Carbodiimide und/oder Polycarbodiimide der Formel (I)
R'-(-N=C=N-R-)ₙ-R" (I),
in der
R einen aromatischen oder araliphatischen Arylen-bzw. Aralkylenrest bedeutet, der in mindestens einer Orthostellung, bevorzugt in beiden Orthostellungen zum aromatischen Kohlenstoffatom, das die Carbodiimidgruppe trägt, aliphatische und/oder cycloaliphatische Substituenten mit mindestens 2 C- Atomen, bevorzugt verzweigte oder cyclische aliphatische Reste mit mindestens 3 C-Atomen, trägt,
R' Aryl, Aralkyl oder R-NCO, R-NHCONHR¹, R-NHCONR¹R² und R-NHCOOR³ bedeutet,
R" -N=C=N-Aryl, -N=C=N-Aralkyl, -NCO, -NHCONHR¹, - NHCONR¹R² oder -NHCOOR³ bedeutet, wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
n eine ganze Zahl von 2 bis 5.000, bevorzugt von 2 bis 500, darstellt, enthalten.

2. Blend gemäß Anspruch 1, **dadurch gekennzeichnet, dass** eine verwendete thermoplastische Formmasse ausgewählt ist aus der Gruppe der Polyester.

3. Verfahren zur Herstellung von Blends gemäß Ansprüchen 1 bis 2, **dadurch gekennzeichnet, dass** 0,01 bis 10 Gew.-%, bezogen auf den gesamten Blend, Carbodiimide und/oder Polycarbodiimide zusammen mit mindestens zwei thermoplastischen Formmassen enthaltend mindestens eine der funktionellen Gruppen -COOH, -OH, -SH, -NH₂, -NHR in einem Mischaggregat oberhalb der Schmelztemperatur mindestens einer der Komponenten miteinander gemischt werden.

4. Verfahren gemäß Anspruch 3, **dadurch gekennzeichnet, dass** das Mischaggregat aus der Gruppe vom Aggregaten bestehend aus Knetern, Einschneckenextrudem, Doppelschneckenextrudern, Kaskadenextrudern, Entgasungs-Extrudem, Mehrschneckenextrudern und Planetwalzenextrudern ausgewählt wird.

5. Verfahren gemäß Anspruch 3, **dadurch gekennzeichnet, dass** als Mischaggregat ein vollständig ineinandergreifender dichtkämmender Doppelschneckenextruder verwendet wird.

6. Verfahren gemäß Anspruch 3. **dadurch gekennzeichnet, dass** als Mischaggregat ein Einschneckenextruder für die Hochleistungsextrusion verwendet wird, der nach dem Stator/Rotor-Prinzip arbeitet.

7. Verfahren gemäß Anspruch 3, **dadurch gekennzeichnet, dass** als Mischaggregat ein Dreischneckenextruder verwendet wird.

8. Verfahren gemäß Anspruch 3, **dadurch gekennzeichnet, dass** als Mischaggregat ein Mehrschneckenextruder verwendet wird, der nach dem Prinzip der Planetenextruder arbeiten.

9. Verfahren gemäß Anspruch 3, **dadurch gekennzeichnet, dass** als Mischaggregat ein kontinuierlich oder diskontinuierlich arbeitender Co-Kneter verwendet wird.

10. Verfahren gemäß Anspruch 3, **dadurch gekennzeichnet, dass** als Mischaggregat ein kontinuierlich arbeitender Dispersionskneter mit langsamlaufender Rotor- Stator-Kombination verwendet wird.

11. Formkörper aus Blends gemäß Ansprüchen 1 bis 2.

12. Formkörper gemäß Anspruch 11, **dadurch gekennzeichnet, dass** es sich um Folien oder Fasern handelt.

13. Formkörper gemäß Anspruch 11, **dadurch gekennzeichnet, dass** es sich um Maschinengehäuse oder KFZ-Teile handelt.

14. Verwendung von Carbodiimiden und/oder Polycarbodiimiden als Verträglichkeitsmacher zur Herstellung von Blends aus an sich unverträglichen thermoplastischen Formmassen, **dadurch gekennzeichnet, dass** 0,01 bis 10 Gew.-% Carbodiimide und/oder Polycarbodiimide der Formel
R'-(-N=C=N-R-)ₙ-R" (I),
in der
R einen aromatischen oder araliphatischen Arylen- bzw. Aralkylenrest bedeutet, der in mindestens einer Orthostellung, bevorzugt in beiden Orthostellungen zum aromatischen Kohlenstoffatom, das die Carbodiimidgruppe trägt, aliphatische und/oder cycloaliphatische Substituenten mit mindestens 2 C- Atomen, bevorzugt verzweigte oder cyclische aliphatische Reste mit mindestens 3 C-Atomen, trägt,
R' Aryl, Aralkyl oder R-NCO, R-NHCONHR¹, R-NHCONR¹R² und R-NHCOOR³ bedeutet,
R" -N=C=N-Aryl, -N=C=N-Aralkyl, -NCO, -NHCONHR¹, - NHCONR'R² oder -NHCOOR³ bedeutet,
wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
n eine ganze Zahl von 2 bis 5.000, bevorzugt von 2 bis 500, darstellt, und mindestens zwei verschiedene, an sich unverträgliche thermoplastische Formmassen enthaltend mindestens eine der funktionellen Gruppen -COOH, -OH, -SH, -NH2, -NHR, wobei eine verwendete thermoplastische Formmasse ausgewählt ist aus der Gruppe der Polyamide, zu einem Blend gemischt werden.

## Claims

1. Compatible blends of at least two different, intrinsically incompatible thermoplastic moulding compositions, comprising at least one of the following functional groups: -COOH, -OH, -SH, -NH₂, -NHR, where a thermoplastic moulding composition used has been selected from the group of the polyamides, **characterized in that** they comprise from 0.01 to 10% by weight of carbodiimides and/or polycarbodiimides of the formula (I)
**R'-(-N=C=N-R-)ₙ-R"** (I),
in which
R is an aromatic or araliphatic arylene or aralkylene moiety which bears, in at least one ortho position, preferably in both ortho positions with respect to the aromatic carbon atom bearing the carbodiimide group, aliphatic and/or cycloaliphatic substituents having at least 2 carbon atoms, preferably branched or cyclic aliphatic moieties having at least 3 carbon atoms,
R' is aryl, aralkyl or R-NCO, R-NHCONHR¹, R-NHCONR¹R² and R-NHCOOR³
R" -N=C=N-aryl, -N=C=N-aralkyl, -NCO, -NHCONHR¹, -NHCONR¹R² or -NHCOOR³, where in R' and in R", mutually independently, R¹ and R² are identical or different and are an alkyl, cycloalkyl or aralkyl moiety, and R³ has one of the definitions of R¹ or is a polyester moiety or a polyamide moiety and
n is an integer from 2 to 5000, preferably from 2 to 500.

2. Blend according to Claim 1, **characterized in that** a thermoplastic moulding composition used has been selected from the group of the polyesters.

3. Process for producing blends according to Claims 1 and 2, **characterized in that** from 0.01 to 10% by weight, based on the entire blend, of carbodiimides and/or polycarbodiimides are mixed together with at least two thermoplastic moulding compositions comprising at least one of the following functional groups: : -COOH, -OH, -SH, -NH₂, -NHR in a mixing assembly above the melting point of at least one of the components.

4. Process according to Claim 3, **characterized in that** the mixing assembly is selected from the group of assemblies composed of kneaders, single-screw extruders, twin-screw extruders, cascade extruders, vented extruders, multiscrew extruders and planetary-gear extruders.

5. Process according to Claim 3, **characterized in that** the mixing assembly used comprises a fully intermeshing, closely intermeshing twin-screw extruder.

6. Process according to Claim 3, **characterized in that** the mixing assembly used comprises a single-screw extruder which operates on the stator/rotor principle to give high-performance extrusion.

7. Process according to Claim 3, **characterized in that** the mixing assembly used comprises a three-screw extruder.

8. Process according to Claim 3, **characterized in that** the mixing assembly used comprises a multiscrew extruder which operates on the planetary extruder principle.

9. Process according to Claim 3, **characterized in that** the mixing assembly used comprises a cokneader which operates continuously or batchwise.

10. Process according to Claim 3, **characterized in that** the mixing assembly used comprises a continuously operating dispersion kneader with slow-running rotor-stator combination.

11. Mouldings made of blends according to Claims 1 and 2.

12. Mouldings according to Claim 11, **characterized in that** they are foils or fibres.

13. Mouldings according to Claim 11, **characterized in that** they are machine housings or motor vehicle parts.

14. Use of carbodiimides and/or polycarbodiimides as compatibilizers for producing blends of thermoplastic moulding compositions which are intrinsically incompatible, **characterized in that** from 0.01 to 10% by weight of carbodiimides and/or polycarbodiimides of the formula
**R'-(-N=C=N-R-)ₙ-R"** (I),
in which
R is an aromatic or araliphatic arylene or aralkylene moiety which bears, in at least one ortho position, preferably in both ortho positions with respect to the aromatic carbon atom bearing the carbodiimide group, aliphatic and/or cycloaliphatic substituents having at least 2 carbon atoms, preferably branched or cyclic aliphatic moieties having at least 3 carbon atoms,
R' is aryl, aralkyl or R-NCO, R-NHCONHR¹, R-NHCONR¹R² and R-NHCOOR³,
R" is -N=C=N-aryl, -N=C=N-aralkyl, -NCO, -NHCONHR¹, -NHCONR¹R² or -NHCOOR³, where in R' and in R", mutually independently, R¹ and R² are identical or different and are an alkyl, cycloalkyl or aralkyl moiety, and R³ has one of the definitions of R¹ or is a polyester moiety or a polyamide moiety and
n is an integer from 2 to 5000, preferably from 2 to 500, and at least two different intrinsically incompatible thermoplastic moulding compositions comprising at least one of the following functional groups: -COOH, -OH, -SH, -NH₂, -NHR, where a thermoplastic moulding composition used has been selected from the group of the polyamides, are mixed to give a blend.

## Revendications

1. Mélanges compatibles d'au moins deux matériaux de moulage thermoplastiques différents incompatibles en soi, contenant au moins un des groupes fonctionnels -COOH, -OH, -SH, -NH₂, -NHR, un matériau de moulage thermoplastique utilisé étant choisi dans le groupe des polyamides, **caractérisés en ce qu'**ils contiennent 0,01 à 10 % en poids de carbodiimides et/ou de polycarbodiimides de formule (I)
R'-(-N=C=N-R-)ₙ-R" (I)
dans laquelle
R signifie un radical arylène ou aralkylène aromatique ou araliphatique, qui porte en au moins une position ortho, de préférence en les deux positions ortho par rapport à l'atome de carbone aromatique qui porte le groupe carbodiimide, des substituants aliphatiques et/ou cycloaliphatiques contenant au moins 2 atomes C, de préférence des radicaux aliphatiques ramifiés ou cycliques contenant au moins 3 atomes C,
R' signifie aryle, aralkyle ou R-NCO, R-NHCONHR¹, R- NHCONR¹R² et R-NHCOOR³,
R" signifie -N=C=N-aryle, -N=C=N-aralkyle, -NCO, -NHCONHR¹, -NHCONR¹R² ou -NHCOOR³, R¹ et R² dans R' et R'' étant indépendamment l'un de l'autre identiques ou différents et représentant un radical alkyle, cycloalkyle ou aralkyle, et R³ ayant une des significations de R¹ ou signifiant un radical polyester ou polyamide, et
n représentant un nombre entier de 2 à 5 000, de préférence de 2 à 500.

2. Mélange selon la revendication 1, **caractérisé en ce qu'**un matériau de moulage thermoplastique utilisé est choisi dans le groupe des polyesters.

3. Procédé de fabrication de mélanges selon les revendications 1 à 2, **caractérisé en ce que** 0,01 à 10 % en poids, par rapport au mélange total, de carbodiimides et/ou de polycarbodiimides sont mélangés avec au moins deux matériaux de moulage thermoplastiques contenant au moins un des groupes fonctionnels -COOH, -OH, -SH, -NH₂, -NHR dans un appareil de mélange au-dessus de la température de fusion d'au moins un des composants.

4. Procédé selon la revendication 3, **caractérisé en ce que** l'appareil de mélange est choisi dans le groupe d'appareils constitué par les malaxeurs, les extrudeuses monovis, les extrudeuses bivis, les extrudeuses en cascade, les extrudeuses à dégazage, les extrudeuses polyvis et les extrudeuses à vis planétaires.

5. Procédé selon la revendication 3, **caractérisé en ce qu'**une extrudeuse bivis à engrenage étroit complètement imbriquée est utilisée en tant qu'appareil de mélange.

6. Procédé selon la revendication 3, **caractérisé en ce qu'**une extrudeuse monovis pour l'extrusion haute puissance qui fonctionne selon le principe stator/rotor est utilisée en tant qu'appareil de mélange.

7. Procédé selon la revendication 3, **caractérisé en ce qu'**une extrudeuse trivis est utilisée en tant qu'appareil de mélange.

8. Procédé selon la revendication 3, **caractérisé en ce qu'**une extrudeuse polyvis qui fonctionne selon le principe de l'extrudeuse planétaire est utilisée en tant qu'appareil de mélange.

9. Procédé selon la revendication 3, **caractérisé en ce qu'**un co-malaxeur fonctionnant de manière continue ou discontinue est utilisé en tant qu'appareil de mélange.

10. Procédé selon la revendication 3, **caractérisé en ce qu'**un malaxeur de dispersion à combinaison rotor-stator lente fonctionnant en continu est utilisé en tant qu'appareil de mélange.

11. Corps moulés à partir de mélanges selon les revendications 1 à 2.

12. Corps moulés selon la revendication 11, **caractérisés en ce qu'**il s'agit de films ou de fibres.

13. Corps moulés selon la revendication 11, **caractérisés en ce qu'**il s'agit de boîtiers de machines ou de pièces automobiles.

14. Utilisation de carbodiimides et/ou de polycarbodiimides en tant qu'agent de compatibilisation pour la fabrication de mélanges de matériaux de moulage thermoplastiques incompatibles en soi, **caractérisée en ce que** 0,01 à 10 % en poids de carbodiimides et/ou de polycarbodiimides de formule
R'-(-N=C=N-R-)ₙ-R" (I)
dans laquelle
R signifie un radical arylène ou aralkylène aromatique ou araliphatique, qui porte en au moins une position ortho, de préférence en les deux positions ortho par rapport à l'atome de carbone aromatique qui porte le groupe carbodiimide, des substituants aliphatiques et/ou cycloaliphatiques contenant au moins 2 atomes C, de préférence des radicaux aliphatiques ramifiés ou cycliques contenant au moins 3 atomes C,
R' signifie aryle, aralkyle ou R-NCO, R-NHCONHR¹, R- NHCONR¹R² et R-NHCOOR³
R" signifie -N=C=N-aryle, -N=C=N-aralkyle, -NCO, -NHCONHR¹, -NHCONR¹R² ou -NHCOOR³, R¹ et R² dans R' et R'' étant indépendamment l'un de l'autre identiques ou différents et représentant un radical alkyle, cycloalkyle ou aralkyle, et R³ ayant une des significations de R¹ ou signifiant un radical polyester ou polyamide, et
n représentant un nombre entier de 2 à 5 000, de préférence de 2 à 500,
et au moins deux matériaux de moulage thermoplastiques différents, incompatibles en soi, contenant au moins un des groupes fonctionnels -COOH, -OH, -SH, -NH₂, -NHR, un matériau de moulage thermoplastique utilisé étant choisi dans le groupe des polyamides, sont mélangés pour former un mélange.
